# EUROPÄISCHE PATENTANMELDUNG

(11) **EP 3 825 752 A1**
(43) Veröffentlichungstag der Anmeldung: **26.05.2021**
(21) Anmeldenummer: 19210277.0
(22) Anmeldetag: 20.11.2019
(51) Int. Cl.: G02B 21/02, G01B 9/02, G01J 9/02, G02B 27/10, G02B 27/12

(54) **KOMPAKTES COMMON PATH INTERFEROMETER**

(71) Anmelder: Siemens Aktiengesellschaft, 80333 München (DE)
(72) Erfinder: Engel, Thomas, 73432 Aalen (DE)

(57) **Zusammenfassung**

Die Erfindung betrifft ein Interferometer zur Untersuchung eines Objekts, beispielsweise einer Blutzelle. Das Interferometer umfasst eine Lichtquelle (10) zur Beleuchtung des Objekts mit einem zumindest teilweise kohärenten Lichtfeld (11), ein Objektiv (20) zur Erzeugung eines reellen Pupillenbilds des beleuchteten Objekts in einer Pupillenebene (IV) des Objektivs (20) oder einer dazu konjugierten Ebene, einen Strahlteiler (30), der einen optischen Träger (31) und ein Umlenkelement (32) aufweist, wobei das Umlenkelement (32) in der Pupillenebene (IV) des Objektivs (20) oder einer dazu konjugierten Ebene angeordnet ist und einen Teil des Lichtfelds (11) ablenkt, und einen Sensor (40), der dazu eingerichtet ist, ein Interferenzmuster aus dem abgelenkten Teil (33) des Lichtfelds (11) und dem übrigen, nicht abgelenkten Teil (34) des Lichtfelds (11) aufzunehmen.

Die Erfindung betrifft ferner ein Objektiv (20) für ein Mikroskop zur Untersuchung eines Objekts, beispielsweise einer Blutzelle.

## Beschreibung

Die Erfindung betrifft ein Interferometer zur Untersuchung eines Objekts, beispielsweise einer Blutzelle. Die Erfindung betrifft insbesondere ein Common Path Interferometer in sehr kompakter Bauweise. Die Erfindung betrifft ferner ein Objektiv für ein Mikroskop zur Untersuchung eines Objekts.

Ein Interferometer ist ein technisches Gerät, das Interferenzen von Wellen, also deren Überlagerung, für Präzisionsmessungen nutzt. Gemessen werden können alle Effekte, die die effektive Weglänge der Wellen und damit die Eigenschaften der überlagerten Welle ändern. Beispiele dafür sind Längenänderungen eines der beiden überlagerten Lichtwege zur Längenmessung oder Änderungen des Brechungsindex zur Messung von Materialeigenschaften.

Voraussetzung für eine erfolgreiche Interferenz ist, dass die Wellen kohärent überlagert werden. Das bedeutet, dass die von unterschiedlichen Teilen des Interferometers kommenden Wellen nur dann interferieren können, wenn sich die Wege, also die Lauflängen, nur um weniger als die Kohärenzlänge unterscheiden. Die Kohärenzlänge ist abhängig von der Wellenlänge und der spektralen Bandbreite des verwendeten Lichtes.

Grundsätzlich lässt sich mit jeder Art von Welle, seien es Licht-, Schall-, Materie- oder gar Wasserwellen, Interferenz erzeugen und somit auch Interferometrie betreiben. Von besonderem Interesse im Rahmen dieser Patentanmeldung ist die hochauflösende Untersuchung von Blutzellen mit mikroskopischer Interferometrie. Hierbei ist es insbesondere von Interesse, ein räumliches Abbild der Blutzelle, also ein Abbild mit Tiefeninformation, zu gewinnen.

Bei der Interferometrie werden Wellen, insbesondere elektromagnetische Wellen, überlagert. Um Informationen über ein Objekt, wie beispielsweise eine Blutzelle, zu gewinnen, werden hierfür insbesondere ein Lichtstrahl, der an dem Objekt gestreut (in anderen Worten: abgelenkt) wurde, mit einem nicht abgelenkten Lichtstrahl überlagert. Ersterer Lichtstrahl wird auch als Messstrahl (oder: Objektstrahl), letzterer als Referenzstrahl bezeichnet.

Grundsätzlich gibt es zwei Typen von Interferometern: einen ersten Typ, bei dem die Aufspaltung in Referenz- und Messstrahl vor der Beleuchtung des Objekts erfolgt, und einen zweiten Typ, bei dem sie nach der Beleuchtung erfolgt. Den ersten Typ bezeichnet man in der englischsprachigen Fachliteratur bisweilen als "Different Path Interferometer", der zweite Typ wird in der Fachsprache als "Common Path Interferometer" bezeichnet. In beiden Fällen müssen zur Erzeugung des Interferenzmusters bzw. Interferogramms der Referenz- und der Messstrahl nach ihrer Aufspaltung wieder zusammengeführt und überlagert werden.

Die Auftrennung von Messstrahl und Referenzstrahl hat zur Folge, dass jeglicher optische und mechanische Unterschied in den getrennten Strahlpfaden sich auf das entstehende Interferenzmuster auswirkt. Aus diesem Grund müssen Interferometer in der Regel sehr robust gebaut werden, was sie vergleichsweise schwer, teuer und groß in Bezug auf den benötigten Bauraum macht.

Die Erfindung stellt sich die Aufgabe, ein möglichst kompaktes, kostengünstiges und robustes Interferometer anzugeben, dass insbesondere gut zur absoluten Messung von optischen Wegunterschieden beispielsweise in Blutzellen verwendet werden kann. Die Erfindung stellt sich ferner die Aufgabe, ein Wechselobjektiv für ein Mikroskop anzugeben.

Die erste Aufgabe wird durch ein Interferometer gemäß Anspruch 1, die zweite Aufgabe durch ein Objektiv gemäß Anspruch 13 gelöst. Vorteilhafte Varianten und Weiterbildungen sind in den abhängigen Ansprüchen, der Beschreibung und den Abbildungen offenbart.

Dementsprechend wird in einem ersten Aspekt der Erfindung ein Interferometer zur Untersuchung eines Objekts angegeben, das die folgenden Komponenten aufweist:
- eine Lichtquelle zur Beleuchtung des Objekts mit einem zumindest teilweise kohärenten Lichtfeld,
- ein Objektiv zur Erzeugung eines reellen Pupillenbilds des beleuchteten Objekts in einer Pupillenebene des Objektivs oder einer dazu konjugierten Ebene,
- einen Strahlteiler, der einen optischen Träger und ein Umlenkelement aufweist, wobei das Umlenkelement in der Pupillenebene des Objektivs oder einer dazu konjugierten Ebene angeordnet ist und einen Teil des Lichtfelds ablenkt, und
- einen Sensor, der dazu eingerichtet ist, ein Interferenzmuster aus dem abgelenkten Teil des Lichtfelds und dem übrigen, nicht abgelenkten Teil des Lichtfelds aufzunehmen.

Der Erfindung liegt die Idee zugrunde, einen speziellen Strahlteiler zu verwenden, der örtlich in einer Pupillenebene des Objektivs oder einer dazu konjugierten Ebene angeordnet ist und der einen Teil des Lichtfelds ablenkt.

Das Umlenkelement kann beispielsweise auf der optischen Achse des optischen Systems zur Abbildung des Lichtfelds und/oder des Interferometers platziert sein. In anderen Worten kann das Umlenkelement auf der optischen Achse des Abbildungsstrahlengangs des Interferometers platziert sein. Dieser axiale Bereich des Lichtfelds in der Pupille des optischen Systems wird auch als nullte Ordnung des Pupillenbildes bezeichnet. Da die nullte Ordnung in der Pupillenebene nur die Information einer ebenen Welle trägt, trägt sie die Information, die auch die Referenzwelle, also die Welle, die man typischerweise als Referenzstrahl verwenden würde, tragen würde. Mithilfe des geschickt platzierten Strahlteilers in der Pupillenebene (oder einer dazu konjugierten Ebene) wird also genau der Anteil des Lichtfelds zumindest teilweise abgelenkt, der dem Referenzstrahl entspricht. Bevorzugt werden sowohl der verbleibende Teil des Lichtfeldes als auch das vom Strahlteiler abgelenkte Strahlenbündel weiterhin in demselben optischen System geführt. Je nach optischem System gibt es eine Obergrenze für die maximal mögliche Ablenkung des Strahlenbündels, damit im nachfolgenden optischen Strahlengang keine bzw. keine vollständige Vignettierung des abgelenkten Strahlenbündels erfolgt. Anschließend müssen lediglich die abgelenkte nullte Ordnung des Lichtfelds und der übrige, nicht abgelenkte Teil des Lichtfelds in der Bildebene überlagert werden, um das gewünschte Interferogramm zu erhalten, aus dem dann Rückschlüsse auf das beleuchtete Objekt gezogen werden können. Durch die gemeinsame Strahlführung des verbleibendes Lichtfeldes und des abgelenkten Strahlenbündels in einem optischen System kommt es in der Objektebene automatisch zu einer Überlagerung von Objektwelle und Referenzwelle, wobei die beiden Wellen aufgrund der Ablenkung des Strahlenbündels der nullten Ordnung dann mit einem Winkel überlagert werden, der sich aus dem ursprünglichen Ablenkwinkel und dem wirksamen Vergrößerungsmaßstab des Abbildungssystems von dem Ort des Strahlteilers auf die Detektorebene ergibt. Das dort entstehende Interferenzmuster entspricht im Aussehen dem eines Shear-Interferometers. Eine explizite Aufspaltung des Lichtstrahls in zwei verschiedene Pfade und deren Zusammenführung sind jedoch nicht mehr nötig.

Entscheidend also ist, dass das Umlenkelement einen Teil des Lichtfelds relativ zu dem übrigen Lichtfeld ablenkt. Dies kann beispielsweise dadurch realisiert werden, dass der Strahlteiler mittels des Umlenkelements einen Teil des Lichtfelds ablenkt, der übrige Teil des Lichtfelds den Strahlteiler aber ohne Ablenkung passiert. Es ist aber auch denkbar, dass der übrige Teil des Lichtfelds durch den Strahlteiler abgelenkt wird und das Umlenkelement gerade ein Passieren ohne Ablenkung des Lichtfelds bewirkt.

Das Umlenkelement muss jedoch nicht unbedingt auf der optischen Achse, also in der nullten Ordnung des Lichtfelds, platziert sein. Ist das Umlenkelement in einem anderen Bereich des Lichtfelds in der Pupillenebene des Objektivs platziert, wird entsprechend der dortige Strahl bzw. das dortige Strahlbündel abgelenkt. Je weiter das Umlenkelement jedoch von der optischen Achse entfernt platziert ist, umso geringer wird typischerweise die Intensität in der Pupillenebene und folglich ist das Interferenzsignal entsprechend schwächer ausgeprägt. Bei Proben bekannter Strukturgröße könnte das Umlenkelement auch in denjenigen Bereich der Pupillenebene des Objektivs platziert werden, der der Lage der Beugungsordnung für die spezifische Strukturgröße entspricht. Ist das Interferometer beispielsweise speziell auf die Untersuchung einer gewissen Art von Blutzellen ausgelegt, könnte das Umlenkelement auch in denjenigen Bereich der Pupillenebene des Objektivs platziert werden, der der Lage der Beugungsordnung für diese Art von Blutzellen entspricht.

Ein Interferometer wie beschrieben hat unter anderem die Vorteile, dass der Aufbau weniger Platz benötigt, robuster gegenüber ungewollten Variationen in den Pfadlängen und zudem kostengünstiger ist.

Die Lichtquelle kann eine kohärente Lichtquelle sein. Unter einer kohärenten Lichtquelle wird eine Lichtquelle verstanden, die elektromagnetische Wellen erzeugt, deren Auslenkung bzw. Amplitude sich zeitlich bis auf eine Phasenverschiebung auf dieselbe Weise ändert. Bei zeitlich kohärenten Lichtquellen ist diese Phasenverschiebung innerhalb der Kohärenzzeit wohldefiniert. Eine kohärente Lichtquelle emittiert also kohärentes Licht. Insbesondere Laser stellen im Allgemeinen eine zumindest weitgehend kohärente Lichtquelle dar. Es ist aber auch möglich, dass das Interferometer eine Lichtquelle aufweist, die nicht kohärentes Licht emittiert, und dieses nicht kohärente Licht erst mittels geeigneter Optik und ggf. Filterung in zumindest teilweise kohärentes Licht umgewandelt wird. Entscheidend ist also lediglich, dass das Lichtfeld, das das zu untersuchende Objekt beleuchtet, zumindest teilweise kohärent ist, da ansonsten keine Interferenz und somit kein Interferogramm zwischen Mess- und Referenzstrahl gebildet werden kann.

Eine Lichtquelle, die vollständig kohärentes Licht emittiert ist technisch in der Regel nicht realisierbar. Absolute Kohärenz ist für das vorliegende Interferometer auch weder notwendig noch unbedingt wünschenswert. Die Lichtquelle für das erfindungsgemäße Interferometer sollte jedoch eine zeitliche Kohärenz besitzen, die zumindest in der Größenordnung des optischen Gangunterschieds des Lichtwegs vom optischen Strahlengang für Messtrahl und Referenzstrahl ist. Der optische Gangunterschied kann z.B. auch über die Auswahl eines geeigneten Umlenkelements dahingehend beeinflusst werden, dass der optische Gangunterschied minimiert wird. So kann das Umlenkelement z.B. auf dem optischen Träger aufgebracht werden, was typischerweise den optischen Weg des Referenzstrahls verlängert, oder das Umlenkelement wird in die Trägerplatte eingearbeitet, was typischerweise den optischen Weg des Lichts im Referenzstrahl verkürzt. Als optischer Weg wird die Summe aus dem Produkt aus lokalem Brechungsindex mit der physikalischen geometrischen Länge des zugehörigen Bauteils mit homogenem Brechungsindex entlang des Lichtwegs verstanden. In der vorliegenden Erfindung werden insbesondere die optischen Wege vom Objekt bis zum Bildaufnahmesensor für Messtrahl und Referenzstrahl verglichen.

Die Lichtquelle ist also in der Lage, ein zumindest teilweise kohärentes Lichtfeld zu erzeugen. Im Rahmen dieser Patentanmeldung werden die Bezeichnungen "Lichtfeld", "Licht", "Lichtstrahl", "Strahlbündel" und "Wellen" synonym verwendet. Es kann also ebenso gesagt werden, dass die Lichtquelle kohärentes Licht, einen kohärenten Lichtstrahl, ein kohärentes Strahlbündel oder kohärente Wellen erzeugt.

Unter dem Objektiv, welches eine Komponente des Interferometers ist, wird ein Licht sammelndes optisches System verstanden, das eine reelle optische Abbildung eines Gegenstandes, nämlich des Objekts, erzeugt. Das Objektiv kann in seiner einfachsten Ausführungsform aus einer einzigen Sammellinse bestehen. In der Praxis umfasst das Objektiv in der Regel mehrere Linsen und unter Umständen auch weitere optische Elemente wie beispielsweise Spiegel oder Blenden.

Das Objektiv erzeugt ein sogenanntes Zwischenbild im Feldstrahlengang, der auch als Lukenstrahlengang bezeichnet wird. Es kann sich dabei um ein reelles, seitenverkehrtes Bild des Objekts handelt, das auch von einer Mattscheibe aufgefangen werden könnte. Seine Größe entspricht bei Mikroskopen zum Beispiel direkt der Maßstabszahl des Objektivs, wobei das Zwischenbild von einer dem Objektiv im Strahlengang nachfolgenden zugehörigen Tubuslinse erzeugt wird. Das heißt, dass bei Verwendung eines 20x-Objektivs jede Struktur im Zwischenbild der zugehörigen Tubuslinse (genau) um den Faktor 20 größer ist als in Wirklichkeit.

Alternativ kann es sich bei dem von dem Objektiv erzeugten Zwischenbild auch um ein virtuelles Zwischenbild handeln.

Das Zwischenbild befindet sich in Ausbreitungsrichtung des Lichtfelds hinter dem Objektiv in der sogenannten Zwischenbildebene. Bei einem Mikroskop befindet sich die Zwischenbildebene beispielsweise oftmals innerhalb des Okulars. Das Zwischenbild wird in der Zwischenbildebene erzeugt und stellt ein Bild des Objekts dar. Diese Abbildung ausgehend vom Objekt über ein oder mehrere Zwischenbilder bis zum Bild auf dem Detektor wird auch als Feldabbildung oder Lukenabbildung bezeichnet und die ausgezeichneten Objekt-, Zwischenbild- und Bildebenen sind zum Ortsraum des Objekts zugehörig bzw. konjugiert. Da Linsen in der Abbildung eine Fouriertransformation des Objekts erstellen, folgt auf eine Objekt- oder Zwischenbildebene eine Pupillenebene. Die Pupillenebene ist somit die Ebene der Raumfrequenzen, die in die Pupillenebene abgebildet werden. Die scharfe Abbildung der Raumfrequenzen in der Pupillenebene wird auch als Pupillenbild bezeichnet. Sowohl die Bildebenen der Lukenabbildung als auch der Pupillenabbildung können reell sein, so dass das Bild auf einem Schirm aufgefangen werden kann, oder auch virtuell sein, so dass das Bild nicht auf einem Schirm aufgefangen werden kann, weil es beispielsweise an einem Ort entstehen würde, der vor der Austrittsfläche der letzten für diese Abbildung benötigten Linse liegen würde.

Das Pupillenbild ist technisch die Fouriertransformierte zum Objektbild, also ein Bild in Raumfrequenzen. Die nullte Ordnung des Lichtfelds ist der axiale bzw. achsnahe Bereich des Beugungsbilds und trägt nur die Information einer ebenen Welle. Da die nullte Ordnung nur die Information einer ebenen Welle trägt, trägt sie (nur) die Information, die auch die Referenzwelle, also die Welle des Referenzstrahls, in einem typischen Interferometer trägt.

Der Strahlteiler des erfindungsgemäßen Interferometers befindet sich in einer reellen Zwischenbildebene des Pupillenstrahlengangs des Objektivs oder einer dazu konjugierten Ebene, also in einer Pupillenebene. Unter einer konjugierten Ebene wird eine Ebene im Abbildungsstrahlengang verstanden, die aus einer früheren Ebene durch optische Abbildung hervorgeht. In optischen Strahlengängen gibt es somit zwei Gruppen von ausgezeichneten Ebenen mit ihren zugehörigen konjugierten Ebenen: Zum einen gibt es die Ebenen der Feld- oder Lukenabbildung. Zum anderen gibt es die Pupillenebenen des Pupillenstrahlengangs - also die Ebenen der Pupillenabbildung. Hierunter fallen ebenfalls Zwischenbildebenen, wobei in diesen Zwischenbildebenen nicht das Objekt, sondern z.B. die Lichtquelle abgebildet wird. Feldebenen und Pupillenebenen sind durch eine Fouriertransformation, die das optische System realisiert, miteinander verknüpft.

Das Interferometer weist ferner einen Sensor auf. Der Sensor kann auch als Detektor bezeichnet werden. Er kann beispielsweise als Halbleitersensor (z.B. CCD-Sensor oder CMOS-Sensor) ausgestaltet sein. Der Sensor ist dazu vorgesehen und ausgestaltet, ein Interferenzmuster (in anderen Worten: Interferogramm) abzubilden bzw. aufzunehmen.

In einer Ausführungsform der Erfindung ist das Umlenkelement keilförmig ausgestaltet. In einem Querschnitt des Strahlteilers hat das Umlenkelement insbesondere die Form eines Dreiecks. Die keilförmige Form des Strahlteilers kann alternativ auch als prismenförmig beschrieben werden, wobei die Grundfläche des Prismas ein Dreieck ist. Die keilförmige bzw. prismatische Ausformung des Umlenkelements bewirkt eine Ablenkung des darauf auftreffenden Lichtfelds (in anderen Worten in der vereinfachten Darstellung des Lichtfeldes mittels Lichtstrahlen: des Lichtstrahls), die abhängig ist vom Brechungsindex des Materials des Umlenkelements und dem des umgebenden Mediums sowie dem Keil- bzw. Prismenwinkel.

Befindet sich das Umlenkelement beispielsweise im Bereich der optischen Achse, wirkt die Strahlablenkung nur auf die nullte Beugungsordnung des Lichtfelds. Das Lichtfeld der nullten Beugungsordnung verläuft folglich in Ausbreitungsrichtung des Lichtfelds hinter dem Strahlteiler nicht mehr achsparallel zum restlichen Lichtfeld, sondern mit einem über die Ausgestaltung des Umlenkelements bestimmbaren Neigungswinkel.

Alternativ kann das Umlenkelement auch als ein diffraktives optisches Element mit Mikrostrukturen realisiert sein, wobei die Mikrostrukturen so ausgestaltet sind, dass sie ebenso zumindest teilweise eine Ablenkung des Strahlbündels der nullten Beugungsordnung bewirken. Die Mikrostruktur im diffraktiven optischen Element kann den Lichtstrahl beispielsweise durch den Brechungsindex und/oder durch Höhenmodulation beeinflussen.

In einer Ausführungsform der Erfindung weist das Umlenkelement eine Ausdehnung senkrecht zur Ausbreitungsrichtung des Lichtfelds von höchstens der zehnfachen Auflösung des Objektivs in der Pupillenebene, bevorzugt von höchstens der fünffachen Auflösung des Objektivs in der Pupillenebene, besonders bevorzugt von höchstens der dreifachen Auflösung des Objektivs in der Pupillenebene auf. Selbst eine Ausdehnung des Umlenkelements, die kleiner oder gleich der einfachen Auflösung des Objektivs in der Pupillenebene ist, kann vorteilhaft sein.

Unter der Auflösung des Objektivs in der Pupillenebene wird der Quotient zwischen der Wellenlänge des verwendeten Lichts und der numerischen Apertur der Abbildung des Objektivs in der Pupillenebene verstanden, multipliziert mit dem Faktor 0,61. Dieser Parameter wird in der Mikroskopie auch als Raleigh-Kriterium bezeichnet.

In anderen Worten weist das Umlenkelement eine laterale Ausdehnung auf, die an das Auflösungsvermögen der Optik in der betreffenden Pupillenebene angepasst ist, in der es angeordnet ist. Exemplarisch ergibt sich für typische Objektive und eine Lichtquelle im sichtbaren Bereich damit eine laterale Ausdehnung des Umlenkelements im Bereich zwischen 2 µm und 100 µm.

Es ist entscheidend, dass das Umlenkelement einen Teil des Lichtfelds relativ zu dem übrigen Lichtfeld ablenkt. Insofern besteht eine Ausführungsform der Erfindung darin, dass der Strahlteiler aus einem einzigen Teil mit z.B. zwei planen Ebenen an Vorder- und Rückseite besteht, die zueinander keilförmig angeordnet sind. Das Umlenkelement wäre dann beispielsweise auch keilförmig, dergestalt, dass im Bereich des Umlenkelements Ein- und Austrittsebene effektiv planparallel sind. Dies bewirkt, dass das das Umlenkelement passierende Lichtfeld nicht abgelenkt wird, der übrige Teil des Lichtfelds jedoch schon. Daraus resultiert auch, dass, in anderen Worten, ein Teil des Lichtfelds relativ zu dem übrigen Teil des Lichtfelds abgelenkt wird.

In einer weiteren Ausführungsform des Interferometers spaltet der Strahlteiler mit dem Umlenkelement das Lichtfeld in zwei Richtungen auf und lenkt es ab. Die beiden Richtungen stehen insbesondere aufeinander senkrecht. Wird das Strahlbündel beispielsweise in x- und y-Richtung abgelenkt, wäre auf dem Sensor auch ein Interferenzmuster in x- und y-Richtung sichtbar.

Ein Umlenkelement, das das Strahlbündel des Lichtfelds in mehrere Richtungen ablenkt, ist vorteilhafterweise als diffraktives optisches Element mit Mikrostrukturen ausgestaltet, da ein simpler Keil dies nicht bewerkstelligen könnte. Alternativ wäre auch ein computergeneriertes Hologramm als Umlenkelement für derart komplexe Strahlablenkungen denkbar. Unter Ausnutzung von polarisierenden Eigenschaften könnte das Umlenkelement auch aus einem doppelbrechenden Material gefertigt sein, so dass die in unterschiedlichen Richtungen abgelenkten Strahlen zudem eine unterschiedliche Polarisationsrichtung aufweisen. Dies bietet den weiteren Vorteil, dass die Interferogramme für die beiden Aufspaltungsrichtungen über die unterschiedliche Polarisation entkoppelt werden können, wenn das optische Abbildungssystem geeignete polarisations-optische Abbildungseigenschaften aufweist, die z.B. im Falle von Mikroskopen bekannt und verfügbar sind.

Zur Optimierung des Kontrasts des erzielten Interferenzmusters kann es vorteilhaft sein, zusätzlich zu dem Strahlteiler mit dem Umlenkelement weitere polarisationsoptische Bauteile vorzusehen. Dies können beispielsweise Verzögerungsplatten wie etwa Lambda/4 oder Lambda/2 Platten oder Polarisatoren sein.

Der optische Träger weist insbesondere eine Eintrittsebene, durch die das Lichtfeld in den optischen Träger eintritt, und eine Austrittsebene, an der das Lichtfeld aus dem optischen Träger austritt, auf. Die Eintritts- und Austrittsebene können planparallel zueinander ausgerichtet und insbesondere im Wesentlichen senkrecht zur Ausbreitungsrichtung des Lichtfelds angeordnet sein. "Im Wesentlichen" schließt Abweichungen von bis zu 5° von der Senkrechten zur Ausbreitungsrichtung des Lichts ein.

Der optische Träger kann prinzipiell jedoch auch geneigt im Strahlengang des Lichtfelds stehen. Funktional ist nur wichtig, dass ein Teil des Lichtfelds mit einer anderen Strahlachse (oder: Richtung) aus dem Strahlteiler austritt als das restliche Bündel des Lichtfelds, das eine gemeinsame Strahlachse aufweist.

Als optischer Träger kann beispielsweise eine Linse des optischen Abbildungssystem verwendet werden. Diese Linse kann vorteilhafterweise eine Feldlinse sein.

Die nachfolgende Abbildungsoptik, die das Lichtfeld auf eine Detektionsfläche oder einen Bildaufnahmesensor abbildet, ist zur Minimierung möglicher Abbildungsfehler weiterhin bevorzugt auf die Strahlachse des restlichen Bündels des Lichtfeldes zentriert. Dann verläuft z. B. nur das Strahlungsbündel für die nullte Ordnung mit einem Neigungswinkel durch die nachfolgende Optik. Bei der Auslegung des optischen Systems ist darauf zu achten, dass dieses geneigte Bündel an den nachfolgenden optischen Bauteilen möglichst nicht beschnitten wird. Dieser Beschnitt wird auch als Vignettierung bezeichnet.

Bei der Wahl des Ablenkwinkels ist zu beachten, dass die nachfolgende Optik ggf. den Neigungswinkel des Strahlbündels der nullten Ordnung über den jeweiligen Abbildungsmaßstab bzw. ein Vergrößerungsverhältnis für die Teilabbildung verändert. Möchte man zum Beispiel ein Shear-Interferometer mit gegebenem Streifenabstand bei der Messwellenlänge aufbauen, so muss der Neigungswinkel des Strahlenbündels der nullten Ordnung an der Detektionsfläche eine dazu passende Größe haben, die mit der Interferenzbeziehung für den Streifenabstand bestimmt werden kann.

In einer Ausführungsform der Erfindung weist das Umlenkelement in zumindest einer Richtung einen festen Ablenkwinkel auf. Hierfür kann der Strahlteiler beispielsweise fest, d.h. unbeweglich, gegenüber dem Objektiv des Interferometers angeordnet sein.

In einer alternativen Ausführungsform der Erfindung weist das Umlenkelement in Verbindung mit einer Ansteuereinheit mehrere diskrete Ablenkwinkel auf. In anderen Worten weist das Umlenkelement in diesem Fall also einen variablen Ablenkwinkel auf. Dies kann beispielsweise über elektro-optische Bauteile, magneto-optische Bauteile oder auch Flüssigkristalle erreicht werden, die über ein angelegtes elektrisches bzw. magnetisches Feld den Ablenkwinkel des Umlenkelements einstellen. Das Umlenkelement muss in diesem Fall nicht notwendigerweise beweglich gegenüber z.B. dem Objektiv sein.

In einer weiteren alternativen Ausführungsform der Erfindung weist das Umlenkelement einen einstellbaren Ablenkwinkel auf. Hierbei ist der Ablenkwinkel vorzugsweise mittels einer Ansteuereinheit einstellbar und ändert direkt seine Orientierung bzw. Lage bezüglich z.B. dem Objektiv. Der Strahlteiler ist somit bezüglich zumindest Teilen des restlichen Interferometers beweglich angeordnet.

In einer weiteren Ausführungsform der Erfindung weist die Eintrittsebene des Strahlteilers eine Beschichtung zur Reduzierung der Reflektion des auftreffenden Lichtfelds auf. Die reflexmindernde Beschichtung hat die Funktion, Störeffekte durch reflektiertes Licht zu minimieren und die Intensität des Lichtfelds möglichst wenig zu reduzieren.

Für die Fertigung des Strahlteilers, insbesondere des Umlenkelements, gibt es eine Reihe von Optionen:
Das Umlenkelement kann z.B. angesprengt werden und wird dann nur mithilfe der molekularen Anziehungskräfte an der planen Seite des optischen Trägers gehalten. Ebenso kann das Umlenkelement mit dem optischen Träger kompaktiert, also zusammengedrückt werden. Hier kann ggf. ein Laser zu Hilfe genommen werden.

Das Umlenkelement kann auch in den optischen Träger eingeschliffen bzw. einpoliert werden.

Ferner ist ein Einätzen der Struktur des Umlenkelements in den optischen Träger möglich. Dies ist beispielsweise nasschemisch, mit lithographischen Techniken oder mithilfe von (reaktivem) Ionenstrahlätzen möglich.

Analog zur Herstellung von Gradientenlinsen (auch: Gradienten-Index-Linsen) kann auch ein Ionentausch in dem optischen Träger vorgenommen werden, um das Umlenkelement mit dem optischen Träger zu verbinden bzw. in diesen einzuarbeiten.

Allgemein kann das Umlenkelement auch mittels eines Beschichtungsverfahrens auf den optischen Träger aufgebracht werden. Hier sind vorteilhafterweise Photolacke für die Abdeckung der nicht zu beschichtenden Bereiche des optischen Trägers zu verwenden. Es kann der optischen Träger aber auch großflächig, beispielsweise keilförmig, beschichtet werden, um anschließend den äußeren Bereich um das Umlenkelement herum abzuätzen.

Das Umlenkelement kann ferner in den optischen Träger eingepresst oder eingeprägt werden.

Besteht das Umlenkelement aus einem diffraktiven optischen Element oder einem computergenerierten Hologramm, kommen dem Fachmann in diesem Bereich bekannte mikro-optische Fertigungsverfahren zum Einsatz.

Bei der Auswahl und Ausführung des Umlenkelements ist es vorteilhaft möglich, die Lichtpfade für den abgelenkten und nicht abgelenkten Teil des Strahlbündels bestmöglich anzugleichen oder im Idealfall gleich groß zu wählen, um ein Interferenzmuster mit optimiertem Kontrast zu erzeugen.

Alternativ und besonders bevorzugt kann das Umlenkelement auch unmittelbar auf eine Oberfläche einer Linse des Objektivs über eine der geschilderten Verfahren ein- oder aufgebracht werden, wenn die gewählte Pupillenebene auf oder in der Nähe der betreffenden Linsenoberfläche angeordnet ist. Derartige Anordnungen kommen bei optischen Designs von Objektiven vor, insbesondere weil dann ggf. die Linsenfassung zugleich - zumindest in guter Näherung - als begrenzende Aperturblende des Objektivs wirkt. Dieser Ansatz hat den Vorteil, dass auf das zusätzliche Element einer Trägerplatte für das Umlenkelement komplett verzichtet werden kann, da jedes zusätzliche Element im Strahlengang Verluste der maximal erreichbaren Abbildungsleistung durch z.B. Reflexion an den beschichteten oder unbeschichteten Oberflächen, Streuung an den Oberflächen und Störstellen im Material oder Absorption im Material verursachen kann.

Zusammenfassend ermöglicht die vorliegende Erfindung einen Aufbau, der besonders robust gegen mechanische Störungen durch Vibrationen oder thermische Effekte ist. Dies wird im Wesentlichen dadurch erreicht, dass das Strahlbündel der nullten Ordnung, entsprechend dem Referenzstrahl, und das übrige Strahlbündel, entsprechend dem Messstrahl, vollständig und nur auf leicht verändertem Strahlweg durch dieselbe Optik verlaufen. Im Gegensatz dazu finden bei herkömmlichen Interferometern eine Aufspaltung und Zusammenführung der beiden Strahlen statt.

Ferner ist ein Interferometer gemäß der vorliegenden Erfindung besonders kompakt, also platzsparend, ausführbar. Der sonst übliche beträchtliche Aufwand für den Aufbau eines Interferometers reduziert sich nämlich auf die Ausführung der Strahlteilers mit dem (zentralen) Umlenkelement für einen Teilbereich des Strahlenbündels.

Insbesondere, wenn das Umlenkelement und ggf. der Strahlteiler in einer (reellen) Pupillenebene im Objektiv angeordnet sind, sind alle an einem Abbildungssystem zu verändernden Teile, um aus einem normalen Abbildungssystem ein Interferometer zu erhalten, in einem Objektiv kompakt zusammengefasst.

So kann beispielsweise ein Mikroskop oder eine Kamera nur durch den Austausch des Objektivs in einfacher Weise zu einem interferometrischen System weitergebildet werden.

Alternativ und besonders bevorzugt kann das Umlenkelement auch schaltbar ausgeführt sein, so dass durch Ein- und Ausschalten einer externen Ansteuerung die Strahlumlenkung ein- bzw. ausgeschaltet werden kann. So kann dann mit ein- und derselben Optik eine Messung des Messobjektes mit unterschiedlichen Mess- bzw. Bildaufnahmemodalitäten erfolgen, ohne dass ein Objektivwechsel erfolgen muss. Alternativ kann die Ansteuerung auch so ausgelegt sein, dass durch Aus- und Einschalten einer externen Ansteuerung die Strahlumlenkung ein- bzw. ausgeschaltet werden kann. In einer Weiterbildung davon ist es auch möglich, dass die Strahlablenkung nicht nur digital ein- und ausgeschaltet werden kann, sondern auch stufenweise oder auch stufenlos einschaltbar bzw. einstellbar ist. Für die Ausführung einer digital, stufenweise oder stufenlos wählbaren Ablenkung können Bauteile aus elektrooptischen oder magneto-optischen Materialien wie beispielsweise Gläsern, Kristallen oder Flüssigkristallen gefertigt werden.

Somit entfällt als weiterer Vorteil des erfindungsgemäßen Interferometers, abgesehen von dem Fertigungsaufwand für den Strahlteiler, auch jeglicher Justieraufwand für das Interferometer, da es intrinsisch - eine gute Optik, insbesondere beugungsbegrenzte Optik, vorausgesetzt - unmittelbar justiert ist. Aufgrund der hohen Auflösung und Genauigkeit der interferometrischen Messung kann es allerdings vorteilhaft sein, ggf. die ohnehin vorhandenen Justierelemente im optischen System und insbesondere im Objektiv für eine Feinkorrektur der Abbildungsgüte der Optik zu verwenden.

Neuartige technische Messgeräte mit hoher Genauigkeit und Robustheit werden unter Verwendung des erfindungsgemäßen Interferometers möglich, so wie sie z.B. in der Hämatologie in der Routinediagnostik oder allgemein in der Labormedizin oder der Fertigungsüberwachung von Mikrostrukturen für MEMS, MOEMS etc. gebraucht werden. Ein Interferometer wie in der vorliegenden Patentanmeldung beschrieben kann allgemein vorteilhafterweise in der echtzeitfähigen 3D-Prozessmesstechnik im Bereich der Industrie 4.0, der Medizin 4.0 oder für die Qualitätskontrolle in der Fertigung von Mikro- und Nanostrukturen im Bereich von ca. unterhalb einem Millimeter eingesetzt werden.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1:: den Lukenstrahlengang und den Pupillenstrahlengang einer Ausführungsform des erfindungsgemäßen Interferometers;
- Fig. 2:: ein erstes Ausführungsbeispiel eines Umlenkelements;
- Fig. 3:: ein zweites Ausführungsbeispiel eines Umlenkelements; und
- Fig. 4:: ein drittes Ausführungsbeispiel eines Umlenkelements.

Gleiche Bezugszeichen in unterschiedlichen Abbildungen referenzieren gleiche oder ähnliche Bauteile.

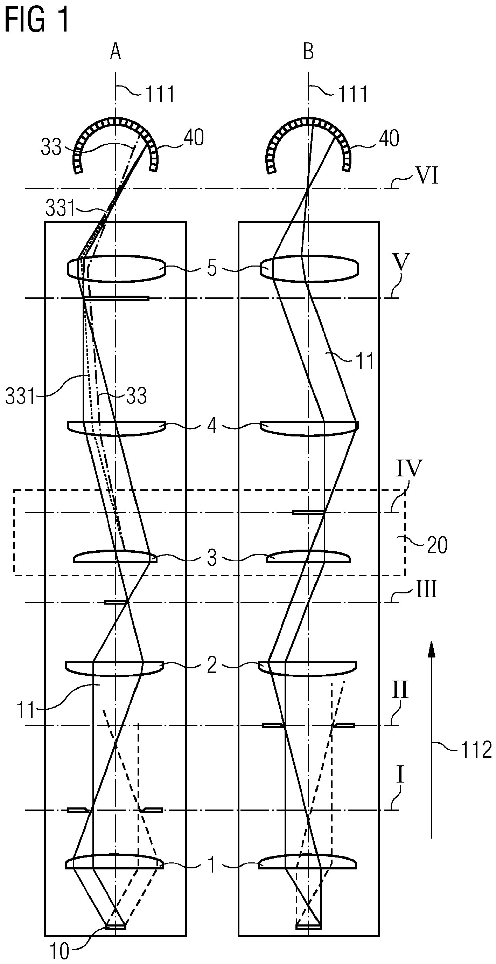

Die Abbildung 1 (auch als Fig. 1 bezeichnet) zeigt schematisch den Lukenstrahlengang A (linke Seite) und den Pupillenstrahlengang B (rechte Seite) eines Interferometers gemäß einer Ausführungsform der Erfindung.

Eine Lichtquelle 10 emittiert ein Lichtfeld 11. In einer ersten Alternative emittiert die Lichtquelle 10 unmittelbar zumindest teilweise kohärentes Licht - dies ist in der Regel beispielsweise bei einem Laser der Fall. In einer zweiten Alternative emittiert die Lichtquelle 10 nicht kohärentes Licht, das jedoch mittels entsprechender optischer Elemente in kohärentes Licht umgewandelt wird.

Das zumindest teilweise kohärentes Lichtfeld passiert zunächst einen Kollektor 1 und wird anschließend durch eine Blende, die als Leuchtfeldblende bezeichnet wird, im Lukenstrahlengang A räumlich begrenzt. Der Kollektor 1 ist beispielsweise als Sammellinse ausgestaltet. Die Ebene, in der sich die Leuchtfeldblende befindet, wird als Leuchtfeldblendenebene I bezeichnet. Nach der Leuchtfeldblende folgt in Ausbreitungsrichtung 112 des Lichts eine Aperturblende. Die Ebene, in der sich die Aperturblende befindet, wird als Aperturblendenebene II bezeichnet. Durch die Aperturblende wird das Lichtfeld 11 im Pupillenstrahlengang B räumlich begrenzt. Anschließend passiert das Lichtfeld 11 einen Kondensor 2, weswegen die eben erwähnte Aperturblende auch als Aperturblende des Kondensors 2 bezeichnet wird. Der Kondensor 2 kann konkret beispielsweise als Sammellinse ausgestaltet sein.

Das derart kollimierte Lichtfeld 11 trifft auf das Objekt, das auch als Präparat bezeichnet werden kann, und durchleuchtet dieses. Das Objekt kann beispielsweise eine Blutzelle in einer Durchflusszelle sein. Die Ebene, in der sich das Objekt befindet, wird als Objektebene III bezeichnet. Das Lichtfeld erreicht anschließend das Objektiv 20. Das Objektiv 20 weist unter anderem eine Objektivlinse 30 auf. Es erzeugt im Lukenstrahlengang A mittels einer Tubuslinse 4 ein Bild, das auch als Zwischenbild bezeichnet wird, des sich in der Objektebene III befindlichen Objekts in einer Zwischenbildebene V. Dieses Bild wird von einem Okular mit einer Okularlinse 5 weiter vergrößert und auf einen Sensor 40 abgebildet bzw. von diesem aufgenommen.

In der Abbildung 1 ist beispielhaft ein gekrümmter Sensor 40 gezeigt. Selbstverständlich sind jedoch im Prinzip jede Ausgestaltungsform der Sensoren, insbesondere auch ebene Sensoren, möglich.

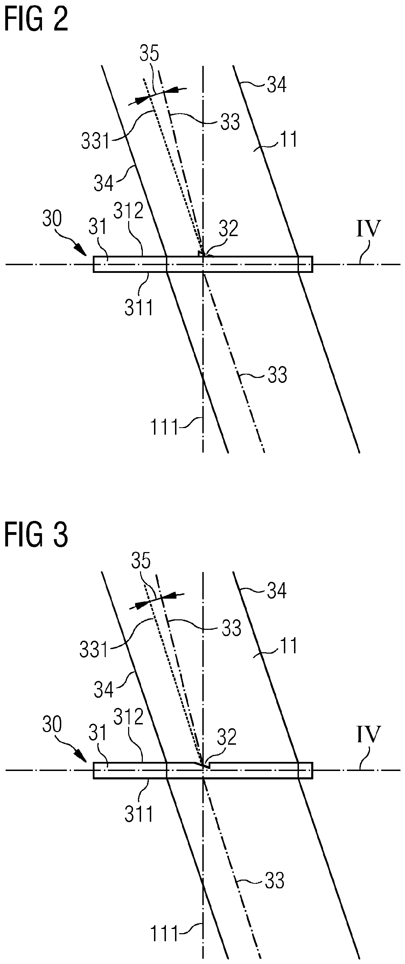

Zwischen der Objektivlinse 3 und der Zwischenbildebene V befindet sich die Pupillenebene IV des Objektivs 20. Die Pupillenebene IV des Objektivs 20 ist insbesondere eine konjugierte Ebene zur Aperturblendenebene II. Hier, das heißt in der Pupillenebene IV, befindet sich in der in Abbildung 1 gezeigten Ausführungsform des erfindungsgemäßen Interferometers ein Strahlteiler 30. Aus Gründen der Übersichtlichkeit ist der Strahlteiler 30 in der Abbildung 1 nicht eingezeichnet; siehe hierfür die Abbildungen 2 - 4, die einen vergrößerten Ausschnitt des Lukenstrahlengangs A um die Pupillenebene IV zeigen. Der Effekt des Strahlteilers 30, insbesondere seines Umlenkelements 32, ist jedoch bereits in Abbildung 1 sichtbar: Das Lichtfeld 11 besteht im Lukenstrahlengang A im Bereich der Pupillenebene IV aus einer Vielzahl paralleler Strahlen. Derjenige Strahl, der im Lukenstrahlengang A in der Pupillenebene IV die optische Achse 111 des Lichtfelds 11 kreuzt, ist in Abbildung 1 explizit eingezeichnet. In Ausbreitungsrichtung des Lichts hinter der Pupillenebene IV ist dieser Strahl gestrichelt gezeichnet und mit dem Referenzzeichen 331 versehen. Der gestrichelte Strahl stellt dabei den die optische Achse 111 in der Pupillenebene IV schneidende Strahl des Lichtfelds 11 dar, wenn sich kein Umlenkelement 32 in der Pupillenebene IV befinden würde. Der punkt-strichlierte Strahl 33 hingegen stellt den Verlauf des Strahls dar, der durch ein Umlenkelement 32, das sich in der Pupillenebene IV auf der optischen Achse 111 befindet, abgelenkt wird. Wie zu sehen ist, wird der sogenannte achsnahe Strahl 33 des Lichtfelds 11 durch das Umlenkelement 32 in Richtung der optischen Achse 111 abgelenkt. Der Bereich um die optische Achse 111 wird auch als nullte Beugungsordnung des Lichtfelds 11 bezeichnet. Aufgrund der Anordnung der Tubuslinse 4 und der Okularlinse 5 führt dies dazu, dass ein Teil des Lichtfelds 11 (nämlich derjenige Teil, der im Lukenstrahlengang A in der Pupillenebene IV durch die optische Achse 111 verläuft) an einem etwas anderen Punkt auf dem Sensor 40 abgebildet wird, als dies ohne das Umlenkelement 32 im Strahlengang der Fall gewesen wäre. Dies führt zu einem Interferenzmuster (in anderen Worten: Interferogramm), aus dem z. B. Informationen über tieferliegende Schichten (3D-Informationen) oder Materialeigenschaften der Probe, d. h. des Objekts, gewonnen werden können.

Verfolgt man den Strahlengang bei richtig eingestellter Köhlerscher Beleuchtung, so existieren also vier miteinander konjugierte Ebenen, in deren Bereich die Leuchtfeldblende oder deren Bild scharf wiedergegeben wird: Die Leuchtfeldblendenebene I, die Objektebene III, die Zwischenbildebene V und die Ebene, in der sich der Sensor 40 befindet. Die Leuchtfeldblende und ihre Bilder werden auch als Luken bezeichnet. Konstruiert man den Strahlengang für einen Punkt im Bereich der Leuchtfeldblende, so entsteht eine bildliche Darstellung des Lukenstrahlengangs A.

Auch von der zweiten wichtigen Blende, der Aperturblende des Kondensors 2, existieren vier miteinander konjugierte Ebenen, in deren Bereich die Aperturblende oder deren Bild scharf wiedergegeben wird: Die Ebene, in der sich die Lichtquelle 10 befindet, die Aperturblendenebene II, die Pupillenebene IV des Objektivs 20 und die Pupillenebene VI des Okulars. Letztere wird auch als Austrittspupille (oder: Austrittspupillenebene) des Okulars bezeichnet. Analog zum Lukenstrahlengang A lässt sich somit auch ein Pupillenstrahlengang B konstruieren.

Die Abbildungen 2 bis 4 zeigen jeweils einen vergrößerten Ausschnitt des Lichtfelds 11 des Lukenstrahlengangs A im Bereich der Pupillenebene IV des Objektivs 20. Es ist bewusst dieser Bereich vergrößert gezeigt, da sich hier der Strahlteiler 30 mit dem Umlenkelement 32 befindet, der sozusagen aus einem Durchlichtmikroskop das erfindungsgemäße Interferometer macht.

Die Abbildung 2 zeigt einen Strahlteiler 30, der aus einem optischen Träger 31 und einem Umlenkelement 32 besteht. Der optische Träger 31 kann beispielsweise aus Glas oder Kunststoff bestehen. Es ist vorteilhaft, wenn der Transmissionskoeffizient des optischen Trägers 31 für die Wellenlängenbereich, in dem die Lichtquelle 10 emittiert, möglichst groß ist. Hierfür kann die Eintrittsebene 311 und/oder die Austrittsebene 312 zusätzlich mit einer reflexmindernden Beschichtung versehen sein. Der optische Träger 31 weist eine Eintrittsebene 311 und eine Austrittsebene 312 auf, die parallel zueinander sind. Der optische Träger 31 in Abbildung 2 kann somit auch als Trägerplatte bezeichnet werden.

Auf der Austrittsebene 312 des optischen Trägers 31 ist das Umlenkelement 32 aufgebracht. Das Umlenkelement 32 ist in der in Abbildung 2 gezeigten Ausführungsform keilförmig ausgestaltet. Das Umlenkelement 32 weist im Querschnitt eine Dreiecksform auf, wie in Abbildung 2 gut zu sehen ist. Die Form des Umlenkelements 32 kann auch als prismenförmig bezeichnet werden.

Dies bewirkt, dass derjenige Strahl 33 bzw. dasjenige Strahlbündel, dass an dem keilförmigen Umlenkelement 32 aus dem Strahlteiler 30 austritt, relativ zu denjenigen Strahlen 34 bzw. Strahlbündeln, die an der Austrittsebene 312 des Strahlteilers 30 austreten, abgelenkt wird. Der Ablenkwinkel ist in der Abbildung 2 mit dem Bezugszeichen 35 gekennzeichnet. Der Verlauf desjenigen Strahls, der unter Weglassung des Umlenkelements 32 vorliegen würde, ist, wie in Abbildung 1 gestrichelt gezeichnet und mit dem Referenzzeichen 331 versehen.

Der Strahlteiler 30 hat also die Funktion, das Strahlbündel 33 der nullten Beugungsordnung (in dem Fall, dass das Umlenkelement 32 im Bereich der optischen Achse 111 platziert ist) im Vergleich zu dem übrigen Lichtfeld bzw. den übrigen Strahlbündeln 34 abzulenken. Als Folge trifft das Strahlbündel 33 der nullten Beugungsordnung auf einem anderen, leicht versetzten, Bereich mit einem abgeändertem Auftreffwinkel auf einen in Ausbreitungsrichtung 112 des Lichtfelds 11 dahinter platzierten Sensor 40 als die übrigen Strahlbündel.

Der Winkel des Keils beeinflusst den Ablenkwinkel 35, mit dem das dort austretende Strahlbündel 33 von dem übrigen, nicht abgelenkten Teil des Lichtfelds 34 abgelenkt wird.

Das Strahlbündel der nullten Beugungsordnung trägt nur die Information einer ebenen Welle. Sie trägt also die Information, die auch eine Referenzwelle in einem herkömmlichen Interferometer tragen würde. Das Strahlbündel des restlichen Lichtfelds trägt dagegen die Information der am Objekt gestreuten Welle. Überlagern sich nun beide Wellen am Ort des Sensors, kommt es zu konstruktiver und destruktiver Interferenz und ein Interferenzmuster (oder: Interferogramm) entsteht. Aus dem Interferenzmuster lassen sich dann Informationen über das untersuchte Objekt, beispielsweise Tiefeninformation oder Information über die Materialeigenschaften, gewinnen.

Das Umlenkelement 32 kann auf den optischen Träger 31 aufgeklebt, aufgespritzt oder schichtweise abgeschieden werden. Alternativ kann das Umlenkelement 32 auch in den optischen Träger 31 eingearbeitet werden; in diesem Fall sind Trägerplatte 31 und Umlenkelement 32 einstückig. Zum Einarbeiten in die Trägerplatte können mechanische Verfahren wie z. B. Laserablation, Ätzverfahren etc. verwendet werden oder alternativ Verfahren eingesetzt werden, die den Brechungsindex und damit die optische Dichte des Trägermaterial zumindest lokal verändern, wie z.B. Ionendiffusion oder (Kurzpuls-) Laserstrahlen z.B. in Laserschreibern.

Es ist auch ein Umlenkelement 32 denkbar, dass komplementär zu dem hinzugefügten Keil aus Abbildung 2 aus einer keilförmigen (in anderen Worten: prismenförmigen) Aussparung besteht, siehe Abbildung 3 (auch als Fig. 3 bezeichnet). Hier sind im Wesentlichen dieselben (komplementären) Formen wie in Abbildung 2 denkbar. Ein solches Umlenkelement 32 kann beispielsweise angesprengt, eingeschliffen, eingeätzt (nasschemisch, lithographisch oder mithilfe reaktivem Ionenätzen), eingepresst oder eingeprägt werden.

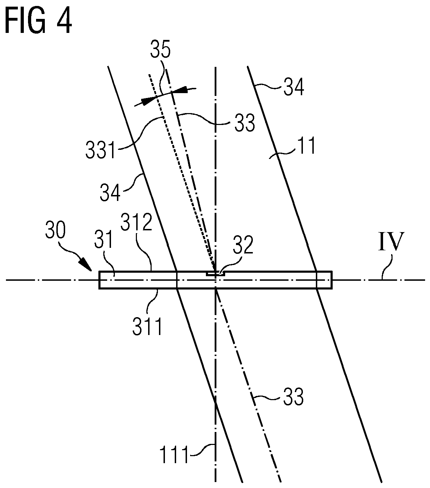

Schließlich kann das Umlenkelement 32 auch als diffraktives optisches Element mit Mikrostrukturen ausgestaltet sein, was in Abbildung 4 (auch als Fig. 4 bezeichnet) schematisch angedeutet ist. Die Mikrostrukturen können beispielsweise in Bereichen unterschiedlicher Brechungsindices bestehen, was ebenfalls zu einer Ablenkung des Strahlenbündels 33 nullter Beugungsordnung führt.

Des Weiteren sind zum Beispiel Variationen bei der Ausgestaltung des optischen Trägers 31 denkbar. Anstatt einer Trägerplatte, wie in den Abbildungen 2 bis 4 gezeigt, ist es auch möglich, dass der optische Träger 31 eine Feldlinse, also z.B. eine Sammellinse, umfasst.

Wie auch immer der Strahlteiler 30 und insbesondere das Umlenkelement 32 konkret ausgestaltet sind - wesentlich ist, dass das Umlenkelement 32 bevorzugt in der Pupillenebene IV des Objektivs 20 oder in deren Nähe oder einer zur Pupillenebene IV konjugierten Ebene angeordnet ist und dafür ausgestaltet ist, einen Teil eines das Objekt beleuchtenden Lichtfelds 11 abzulenken.

## Patentansprüche

1. Interferometer zur Untersuchung eines Objekts, umfassend
- eine Lichtquelle (10) zur Beleuchtung des Objekts mit einem zumindest teilweise kohärenten Lichtfeld (11),
- ein Objektiv (20) zur Erzeugung eines reellen Pupillenbilds des beleuchteten Objekts in einer Pupillenebene (IV) des Objektivs (20) oder einer dazu konjugierten Ebene,
- einen Strahlteiler (30), der einen optischen Träger (31) und ein Umlenkelement (32) aufweist, wobei das Umlenkelement (32) in der Pupillenebene (IV) des Objektivs (20) oder einer dazu konjugierten Ebene angeordnet ist und einen Teil des Lichtfelds (11) ablenkt, und
- einen Sensor (40), der dazu eingerichtet ist, ein Interferenzmuster aus dem abgelenkten Teil (33) des Lichtfelds (11) und dem übrigen, nicht abgelenkten Teil (34) des Lichtfelds (11) aufzunehmen.

2. Interferometer nach Anspruch 1,
wobei das Umlenkelement (32) eine Ausdehnung senkrecht zur optischen Achse (111) des Lichtfelds (11) von höchstens der zehnfachen Auflösung des Objektivs (20) in der Pupillenebene (IV), bevorzugt von höchstens der fünffachen Auflösung des Objektivs (20) in der Pupillenebene (IV), besonders bevorzugt von höchstens der dreifachen Auflösung des Objektivs (20) in der Pupillenebene (IV) aufweist.

3. Interferometer nach einem der vorhergehenden Ansprüche,
wobei der Strahlteiler (30) und/oder das Umlenkelement (32) in einem Bereich innerhalb der 30-fachen Tiefenschärfe, bevorzugt innerhalb der zehnfachen Tiefenschärfe und besonders bevorzugt innerhalb der dreifachen Tiefenschärfe des Abbildungsstrahlengangs in der Pupillenebene (IV) oder einer dazu konjugierten Ebene des Strahlengangs angeordnet ist.

4. Interferometer nach einem der vorhergehenden Ansprüche,
wobei das Umlenkelement (32) keilförmig ausgestaltet ist.

5. Interferometer nach einem der vorhergehenden Ansprüche,
wobei das Umlenkelement (32) in zumindest einer Richtung einen festen Ablenkwinkel (35) oder in Verbindung mit einer Ansteuereinheit mehrere diskrete Ablenkwinkel oder einen einstellbaren Ablenkwinkel in Abhängigkeit von einer gewählten Ansteuerung einer Ansteuereinheit aufweist.

6. Interferometer nach einem der vorhergehenden Ansprüche,
wobei das Umlenkelement (32) durch ein diffraktives optisches Element mit Mikrostrukturen realisiert ist.

7. Interferometer nach einem der vorhergehenden Ansprüche,
wobei das Umlenkelement (32) auf der optischen Achse (111) des Abbildungsstrahlengangs (11) des Interferometers platziert ist.

8. Interferometer nach einem der vorhergehenden Ansprüche,
wobei der Strahlteiler (30) mit dem Umlenkelement (32) das Lichtfeld (11) in zwei Richtungen, die insbesondere aufeinander senkrecht stehen, aufspaltet und ablenkt.

9. Interferometer nach einem der vorhergehenden Ansprüche,
wobei der optischer Träger (31) eine Eintrittsebene (311), durch die das Lichtfeld (11) in den optischen Träger (31) eintritt, und eine Austrittsebene (312), an der das Lichtfeld (11) aus dem optischen Träger (31) austritt, aufweist.

10. Interferometer nach Anspruch 9,
wobei die Eintrittsebene (311) und/oder die Austrittsebene (312) eine Beschichtung zur Reduzierung der Reflektion des auftreffenden Lichtfelds (11) aufweist.

11. Interferometer nach einem der Ansprüche 9 oder 10,
wobei die Eintritts- (311) und Austrittsebene (312) planparallel zueinander ausgerichtet und insbesondere im Wesentlichen senkrecht zur optischen Achse (111) des Lichtfelds (11) angeordnet sind.

12. Interferometer nach einem der Ansprüche 9 oder 10,
wobei als optischer Träger (31) eine Linse des optischen Abbildungssystems verwendet wird.

13. Objektiv (20) für ein Mikroskop zur Untersuchung eines Objekts, wobei das Objektiv (20) dazu geeignet ist, ein reelles Pupillenbild eines beleuchteten Objekts in einer Pupillenebene (IV) des Objektivs (20) oder einer dazu konjugierten Ebene zu erzeugen, **dadurch gekennzeichnet, dass** das Objektiv (20) einen Strahlteiler (30) mit einem optischen Träger (31) und einem Umlenkelement (32) aufweist, wobei das Umlenkelement (32) in der Pupillenebene (IV) des Objektivs (20) oder einer dazu konjugierten Ebene angeordnet ist und dafür ausgestaltet ist, einen Teil eines das Objekt beleuchtenden Lichtfelds (11) abzulenken.
